Europäisches Patentamt

European Patent Office

Office européen des brevets

(11) Veröffentlichungsnummer: **0 307 600 B1**

# EUROPÄISCHE PATENTSCHRIFT

(45) Veröffentlichungstag der Patentschrift:
25.09.91 Patentblatt 91/39

(51) Int. Cl.⁵: **B62D 29/00**

(21) Anmeldenummer: 88112502.5

(22) Anmeldetag: 02.08.88

(54) Blech-Aussenhaut-Bauteil für Fahrzeuge.

(30) Priorität: 12.09.87 DE 3730757

(43) Veröffentlichungstag der Anmeldung:
22.03.89 Patentblatt 89/12

(45) Bekanntmachung des Hinweises auf die
Patenterteilung:
25.09.91 Patentblatt 91/39

(84) Benannte Vertragsstaaten:
DE FR GB IT SE

(56) Entgegenhaltungen:
EP-A- 0 109 388
DE-A- 2 129 049
DE-C- 2 934 430
FR-A- 2 479 123

(73) Patentinhaber: Bayerische Motoren Werke
Aktiengesellschaft
Patentabteilung AJ-30 Postfach 40 02 40
Petuelring 130
W-8000 München 40 (DE)

(72) Erfinder: Ball, Wilfried
Breslauer Strasse 24
W-8312 Dingolfing (DE)
Erfinder: Altmann, Otto
Dieselstrasse 10
W-8011 Kirchheim (DE)
Erfinder: Schwager, Hans
Kohlstattstrasse 13
W-8065 Eisenhofen (DE)

## Beschreibung

Die Erfindung bezieht sich auf ein Blech-Außenhaut-Bauteil für Fahrzeuge.

Bisher sind Außenhaut-Bauteile für Automobile oder andere Verkehrsmittel bekannt, die entweder aus metallischen Werkstoffen (Stahl, Aluminium) oder aus Kunststoffen aufgebaut sind. Die Außenhaut-Bauteile aus Metall sind relativ schwer, während die Außenhaut-Bauteile aus Kunststoff unter anderem bei der Lackierung Probleme ergeben.

Im Bereich organischer Werkstoffe ist es ferner bekannt, Strukturen aus SMC (Sheet Molding Compound), GMT (Glass Mat Thermoplasts) oder Thermoplaste mit Inserts bei hohem Druck zu hinterpressen. Dadurch erhält die Struktur jedoch eine wellige Oberfläche, die Inserts zeichnen sich ab, auf schräge oder senkrecht zur Druckrichtung stehende Flächen der Inserts ist nur ein geringer bzw. kein Druck aufbringbar und bei komplex geformten Bereichen tritt Falten- und Rißbildung auf. Auch sind die Fertigungskosten solcher hinterpreßten Strukturen relativ hoch.

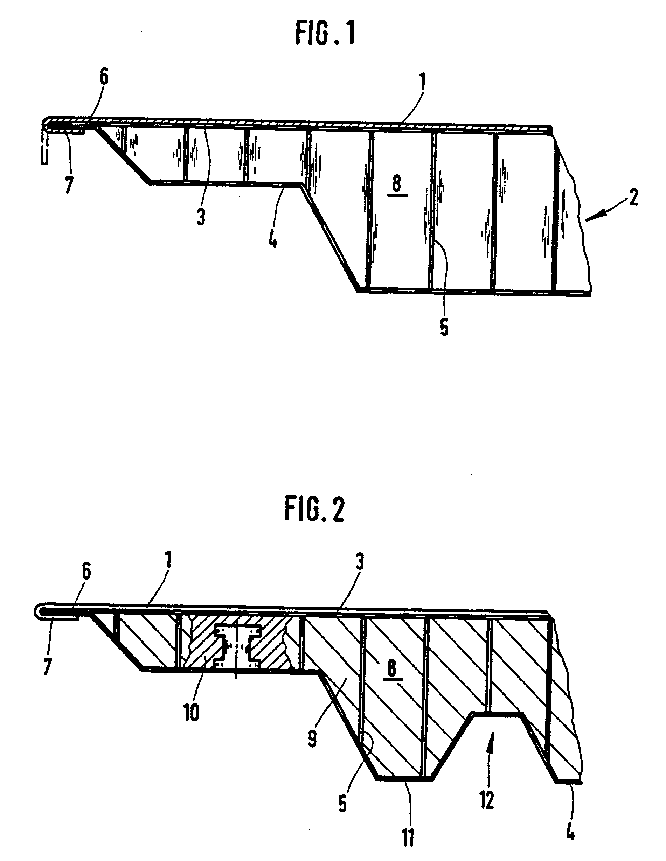

Aus der DE-A-2129049 ist bereits ein Blech-Außenhaut-Bauteil nach dem Oberbegriff des Patentanspruchs 1 bekannt. Soweit die Innenstruktur aus zwei mit Abstand voneinander verlaufenden Kunststoffschichten besteht, sind bei dem bekannten Blech-Außenhaut-Bauteil zwei Befestigungsarten vorgesehen. Zum einen (Fig. 2 und Fig. 4) wird die Innenstruktur mit der Innenseite der Blechschicht verklebt, wobei für den Randbereich der Innenstruktur keine besonderen Vorkehrungen getroffen werden. Zum anderen (Fig. 3) ist die Innenstruktur als selbsttragende Schale ausgebildet, die von der Blechschicht einen Abstand hat und an ihren Rändern in U-förmige Halterungen eingehängt, die auf der Innenseite der Blechschicht angeklebt sind.

Der Erfindung liegt die Aufgabe zugrunde, ein Blech-Außenhaut-Bauteil für Fahrzeuge zu schaffen, das nicht nur gut lackierbar und vergleichsweise leicht ist, sondern darüber hinaus eine hohe Steifigkeit und Festigkeit gewährleistet.

Diese Aufgabe wird erfindungsgemäß dadurch gelöst, daß die beiden Kunststoffschichten im Randbereich des Bauteils aneinanderliegen und die Blechschicht um die aneinanderliegenden Kunststoffschichten im Randbereich umgebördelt ist. Auf diese Weise wird auch im Randbereich des Blechbauteils eine genaue Positionierung der aus zwei Kunststoffschichten bestehenden Innenstruktur erreicht. Dies ist während des Fertigungsprozesses, aber auch für das fertige Bauteil von Bedeutung. Durch das Umbördeln der Blechschicht im Randbereich der beiden Kunststoffschichten entsteht ein besonders inniger Verbund zwischen der äußeren Blechschicht und der Innenstruktur.

Die vorgefertigte Innenstruktur paßt sich vor Aushärtung der reaktiven Matrix des Kunststoffs bei einem relativ geringen Druck von z.B. 10 bar an die Blechschicht an, worauf die thermoreaktive Matrix durch Erwärmen ausgehärtet wird und sich mit der Blechschicht fest verbindet.

Der niedrige Druck zum Anpassen der Innenstruktur an die Blechschicht kann z.B. auch durch die Expansion der thermoreaktiven Matrix der Innenstruktur beim Aushärten derselben aufgebracht werden. Die thermoreaktive Matrix kann z.B. ein Duroplast sein.

Die Herstellung des erfindungsgemäßen Bauteils erfolgt durch Positonierung der Blechschicht in ein Werkzeug. Danach wird die vorgefertigte Innenstruktur mit thermoreaktiver Matrix und Abstandshaltern eingelegt und das Werkzeug geschlossen. Unter einem geringen Druck von ca. 10 bar und gesteuerter Temperaturführung härtet dann der Hybridaufbau aus. Nach Entnahme aus dem Werkzeug wird mittels einer serienmäßigen Bördelmaschine der Umbug des Blechteils um den Randbereich der Innenstruktur vorgenommen. Im Bördelbereich können die Kunststoffschichten auch einen geringen Abstand voneinander haben, wodurch die Kantensteifigkeit erhöht wird.

Beim erfindungsgemäßen Bauteil ist bei zumindest gleich großer Steifigkeit und Festigkeit die Dicke der Blechschicht gegenüber einem herkömmlichen Blech-Außenhaut-Bauteil und damit das Gewicht wesentlich reduziert. Die Gewichtsreduzierung hat eine entsprechende Absenkung des Benzinverbrauchs zur Folge. Ferner wird durch die hohe Festigkeit und Steifigkeit des erfindungsgemäßen Bauteils das Crash-Verhalten verbessert.

Zugleich ist durch die Blechschicht eine problemlose Lackierung des erfindungsgemäßen Bauteils möglich, d. h. eine erfindungsgemäß aufgebaute Fronthaube eines PKW ist z.B. außen wie ein Blechteil lackierbar.

Der relativ geringe Verarbeitungsdruck führt bei hoher Oberflächen- und Konturgenauigkeit zu einer Spannungs- und Verzugsfreiheit des Bauteils.

Zugleich weist das erfindungsgemäße Hybrid-Bauteil durch die Innenstruktur aus Kunststoff weitere entscheidende Vorteile auf. So können in die Zwischenräume zwischen den Abstandshaltern der Innenstruktur schalldämmende Werkstoffe eingebracht werden oder die von der Blechschicht abgewandte Seite der Innenstruktur kann mit einer schalldämmenden Kontur versehen werden.

Auch können Inserts zur Kraftaufnahme, z.B. Gewindebüchsen, in die Innenstruktur eingebaut werden, wobei sie zugleich als Abstandshalter dienen können. Durch solche Inserts ist eine hohe Krafteinleitung in das Bauteil möglich.

Die Fertigungskosten des erfindungsgemäßen Bauteils sind relativ niedrig. So kann bei separat vorgefertigter Innenstruktur das Einlegen der Innenstruktur auf die Blechschicht mit anschließendem Umbördeln in den heute bestehenden, serienmäßigen Arbeitsablauf integriert werden. Das Umbördeln des Blechschichtrandes um die aufeinanderliegenden Kunststoffschichten im Randbereich des Bauteils kann mit einer seriemäßigen. Umbördelmaschine durchgeführt werden.

Nachstehend ist die Erfindung anhand der Zeichnung näher erläutert. Darin zeigen :

Fig. 1 und Fig. 2      jeweils einen Schnitt durch eine erste bzw. zweite Ausführungsform des erfindungsgemäßen Bauteils.

Gemäß Fig. 1 besteht das Bauteil im wesentlichen aus einer äußeren Blechschicht 1 und einer Innenstruktur 2.

Die Innenstruktur 2 ist aus einer an der Blechschicht 1 anliegenden ersten Kunststoffschicht 3 und einer von der ersten Kunststoffschicht 3 im Abstand angeordneten zweiten Kunststoffschicht 4 gebildet. Dazu sind zwischen den beiden Kunststoffschichten 3 und 4 Abstandshalter 5 vorgesehen, die als Rippen ausgebildet sind, die senkrecht zur Blechschicht 1 verlaufen.

Am Randbereich 6 des Bauteiles liegen die Kunststoffschichten 3 und 4 aufeinander, und zwar in Berührung mit der Blechschicht 1. Dadurch kann nach dem Aushärten der Innenstruktur 2 durch Umbördeln der Blechschicht 1 im Randbereich 6 ein Umbug 7 vorgenommen werden, der zu einem festen Verbund zwischen der Blechschicht 1 und der Innenstruktur 2 führt. Bei der Ausführungsform nach Fig. 1 sind die Zwischenräume 8 hohl ausgebildet.

Die Ausführungsform nach Fig. 2 unterscheidet sich von derjenigen nach Fig. 1 im wesentlichen dadurch, daß die Zwischenräume 8 mit einem schalldämmenden Werkstoff 9 gefüllt sind. Weiterhin ist zwischen den beiden Kunststoffschichten 3 und 4, ein Insert 10 angeordnet. Darüber hinaus ist bei der Ausführungsform nach Fig. 2 die von der Blechschicht 1 abgewandte Kunststoffschicht 4 durch entsprechend lange Abstandshalter 5 mit Vorsprüngen 11 und Vertiefungen 12 versehen, um eine schalldämmende Kontur hervorzubringen.

## Patentansprüche

1. Blech-Außenhaut-Bauteil für Fahrzeuge, bei dem an der Innenseite der Blechschicht (1) eine Innenstruktur (2) aus zwei Kunststoffschichten (3, 4) angeordnet ist, die unter Bildung von Zwischenräumen (8) durch Abstandshalter (5) getrennt sind, dadurch gekennzeichnet, daß die beiden Kunststoffschichten (3, 4) im Randbereich (6) des Bauteils aneinanderliegen und die Blechschicht (1) um die aneinanderliegenden Kunststoffschichten (3, 4) im Randbereich (6) umgebördelt ist.

2. Bauteil nach Anspruch 1, dadurch gekennzeichnet, daß die Zwischenräume (8) mit schalldämmenden Werkstoffen gefüllt sind.

3. Bauteil nach Anspruch 1 oder 2, dadurch gekennzeichnet, daß die Abstandshalter (5) zumindest teilweise durch Inserts (10) gebildet sind.

4. Bauteil nach einem der vorstehenden Ansprüche, dadurch gekennzeichnet, daß die Länge der Abstandshalter (5) so gewählt wird, daß die von der Blechschicht (1) abgewandte Kunststoffschicht (4) eine schalldämmende Kontur (11, 12) aufweist.

## Claims

1. A sheet metal body shell component for vehicles, in which an internal structure (2) of two synthetic plastics material layers (3, 4) is arranged on the inner side of the sheet metal layer (1), which layers are separated by distance members (5) forming interspaces (8), characterised in that the two synthetic plastics material layers (3, 4) lie against one another in the edge region (6) of the component and the sheet metal layer (1) is crimped over about the synthetic plastics material layers (3, 4), lying against one another, in the edge region (6).

2. A component according to Claim 1, characterised in that the interspaces (8) are filled with sound-absorbing materials.

3. A component according to Claim 1 or 2, characterised in that the distance members (5) are formed at least partially by inserts (10).

4. A component according to any one of the preceding Claims, characterised in that the length of the distance members (5) is so selected that the synthetic plastics material layer (4) turned away from the sheet metal layer (1) possesses a sound-absorbing contour (11, 12).

**Revendications**

1. Pièce de construction en tôle pour la face extérieure de véhicules, dans laquelle, sur le côté intérieur de la feuille de tôle (1) est disposée une structure interne (2) se composant de deux couches (3) et (4) de matières plastiques, qui sont séparées par des pièces d'écartement (5) en formant des espaces intermédiaires (8), caractérisée en ce que les deux couches de matière plastique (3, 4) reposent l'une sur l'autre sur la zone de bord (6) de la pièce de construction et la feuille de tôle (1) est repliée autour des couches de matière plastique (3, 4) reposant l'une sur l'autre, sur la zone de bord (6).

2. Pièce de construction selon la revendication 1, caractérisée en ce que les espaces intermédiaires (8) sont remplis d'une matière qui étouffe le bruit.

3. Pièce de construction selon la revendication 1 ou 2, caractérisée en ce que les pièces d'écartement 5 sont formées, en partie du moins, par des inserts (10).

4. Pièce de construction selon l'une des revendications précédentes, caractérisée en ce que la longueur des pièces d'écartement est choisie de telle façon que la couche de matière plastique (4) située du côté opposé à la feuille de tôle (1) présente un contour (11, 12) qui étouffe le bruit.

## FIG.1

## FIG.2